# EUROPEAN PATENT APPLICATION

(11) **EP 2 104 345 A1**
(43) Date of publication of application: **23.09.2009**
(21) Application number: 07855717.0
(22) Date of filing: 19.12.2007
(51) Int. Cl.: H04N 7/14

(54) **TEMPLATE REPLACEMENT METHOD, SYSTEM AND DEVICE**

(30) Priority: 21.12.2006 CN 200610167788
(71) Applicant: Huawei Technologies Co., Ltd., Longgang District Shenzhen Guangdong 518219 (CN)
(72) Inventor: WEI, Zhigang, Shenzhen Guangdong 518129 (CN)
(74) Representative: Thun, Clemens
(86) International application number: PCT/CN2007/003685
(87) International publication number: WO 2008/074225

(57) **Abstract**

The present invention discloses a method for template replacement, including: transmitting, by a user terminal, a template replacement request to a central node management device; and controlling, by the central node management device, an edge node device to replace the template for the user terminal. The present invention further discloses a template replacement system, a central node management device and an edge node device. The consumption of network transmission resources and user terminal storage resources during template replacement is reduced, which allows the entire template replacement system to have a higher cost performance.

## Description

### FIELD OF THE DISCLOSURE

The present invention relates to the fields of IPTV and DTV services, and in particular to a method, a system and a device for template replacement.

### BACKGROUND OF THE DISCLOSURE

In IPTV (Internet Protocol Television or Interactive Television) and two-way DTV (Digital TV) services, there is an EPG (Electronic Program Guide) presentation means commonly which is known as template replacement function for a user to select optionally the operation styles and interface functions. The different templates include different interface styles and different functions.

A specific implementation method for template replacement functions is as follows: STB (Set Top Box) presents interface thumbnails of the different styles on a TV screen and the user can select his or her favorite interface style and operation habit on the TV screen by a remote controller. STB replaces the currently used template according to user's selection. Compared with single operation style presentation, the multi-style template may improve service abundance of IPTV system and two-way DTV system more effectively.

A simple technical solution for replacing a template in related art is to substitute a background picture of an operation interface without any function changes except for pictures. With this method, there is no substantial technical change, and the user is only provided with a sense shock of low level and will lose the fresh sense for new background pictures after using them for a period of time.

Another technical solution for replacing a template in related art is to store all EPG presentation templates in STB that completely controls specific operations. When a new EPG presentation template is made and completed, upgrading template information is all loaded into STB of a user terminal over network in order to select and replace a template by a user. Disadvantages of this technical solution lie in that the terminal is required to provide as much as possible storage space and memory resolution space which results in expensive cost of the solution and at the same time the implementation of a terminal is also complex. Taking IPTV network as an example, the terminal is required to be capable of resolving multiple sets of template information. At the same time, the size of a set of complete EPG templates including necessary function upgrades ranges from 6M to 10M, which would consume too much bandwidth and STB storage space during performing a template upgrading process of STB even if the templates are transferred in compressed format, and the storage space of an STB is after all limited, which will necessarily limit the number of templates that can be provided simultaneously. For DTV network, though the transmission mediums are different, the problem of consuming transmission resource and storage resource also exists.

### SUMMARY

The problem to be solved by embodiments of the present invention is to provide a method, system and device for template replacement to overcome the disadvantages in prior art of limited storage space of STB, complex template replacement process and high resource occupation.

To achieve the above-mentioned object, an embodiment of the present invention provides a method for template replacement, including:
transmitting, by a user terminal, a template replacement request to a central node control device; and
controlling, by the central node control device, an edge node device to replace a template for the user terminal.

Another embodiment of the present invention provides a template replacement system, including a central node management device and at least one edge node devices.

The central node management device is configured to manage each of the edge node devices and templates on each of the edge node devices and to control each of the edge node devices to replace a template for a user terminal.

The edge node device is configured to store a template and to replace a template for the user terminal under the control of the central node management device.

Another embodiment of the present invention provides a central node management device, including a management unit and a storage unit.

The management unit is configured to maintain and manage each of edge node devices and to control each of the edge node devices to replace a template for a user terminal.

The storage unit is configured to store a template and to provide a templates for each of the edge node devices under the control of the management unit.

Still another embodiment of the present invention provides an edge node device, including a template storage unit and a template loading unit.

The template storage unit is configured to store a template transmitted from the central node and to sequence all templates transmitted from the central node.

The template loading unit is configured to replace a template for a user terminal under the control of the central node management device.

Compared with prior art, the present invention has the following advantages.

Embodiments of the present invention provide a method, system and device for template replacement. A central node management device manages and maintains each of edge node devices and controls the edge node devices to replace templates for user terminals when the user terminals transmit template replacement requests, thereby enhancing the speed of processing the user terminals' template replacement requests at the network side, saving storage space of user terminals and loss of backbone transmission resources, and improving the performance of the entire system.

### BRIEF DESCRIPTION OF THE DRAWINGS

FIG. 1 is a flowchart of a template replacement method according to the first embodiment of the present invention;

FIG. 2 is a flowchart of a method for transmitting EPG templates to an edge node device from a central node management device according to the second embodiment of the present invention;

FIG. 3 is a schematic block diagram of a template replacement system according to the third embodiment of the present invention;

FIG. 4 is a schematic block diagram of a central node management device according to the third embodiment of the present invention; and

FIG. 5 is a schematic block diagram of an edge node device according to the third embodiment of the present invention.

### DETAILED DESCRIPTION OF THE EMBODIMENTS

The gist of the present disclosure lies in that: templates are arranged on each edge node device and the central node management device arranges and manages the templates stored in each edge node device; when a user terminal requires template replacement, the edge node device transmits selectable template information to the user terminal and replaces templates for the user terminal under the control of the central node management device. These edge node devices have already exist in the existing IPTV architecture and two-way DTV architecture, such as edge EPG server, with their main purpose of storing program data flow, channel list and communicating with user terminal STB.

Implementations of the present invention will be further described with reference to accompanying drawings and embodiments.

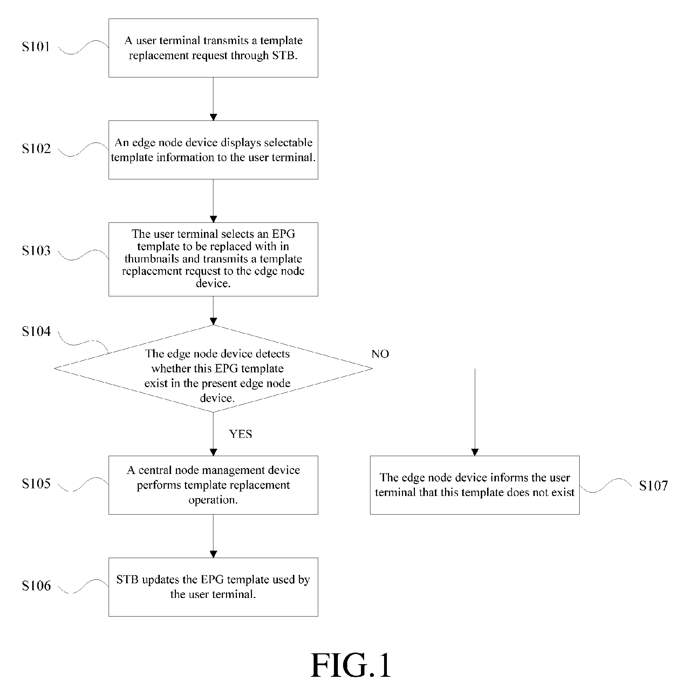

In the first embodiment of the present invention, a method for template replacement as shown in FIG.1 specifically includes the following steps:

In step S101, a user terminal transmits a template replacement request to a central node management device at the network side through an STB.

In step S 102, the central node management device instructs an edge node device of an edge node where the user terminal is located or an edge node device closest to the user terminal to display selectable template information to the user terminal according to location information of the user terminal. The edge node device queries currently available EPG template information on the edge node device via SOAP (Simple Object Access Protocol) and transmits a query result in the form of thumbnail to the user terminal for selection.

In step S103, the user terminal transmits a request for replacement with a specified template to the edge node device. The user terminal selects an EPG template to be replaced with in the thumbnails and transmits a template replacement request to the edge node device.

In step S104, the edge node device detects whether this EPG template exists in the present edge node device, if this EPG template exists in the present edge node device, the process proceeds to step S105, and if this EPG template doesn't exist in the present edge node device, the process proceeds to step S107.

In step S105, the central node management device performs template replacement operation by controlling the edge node device to transmit the specified template to the user terminal and replace an EPG template currently used by the user terminal with the above-mentioned specified EPG template.

In step S106, the STB updates the EPG template used by the user terminal and ends the process. After the central node confirms that the replacement is successful, the STB updates a currently used template to the newly selected EPG template which is acquired from the edge node device by the user terminal, and ends the process.

In step S107, the edge node device informs the user terminal that the template does not exist and ends the process. In this case, the possible reasons why the EPG template selected by the user terminal does not exist include network communication failure, edge node device failure or damaged template files stored in the edge node device.

In addition, the edge node device and the STB also have memory function to remember the template configuration information most recently selected by the user terminal. After turning on the STB again, the template of the user terminal may be directly displayed as the recently updated EPG template. At the same time, if the central node suspends the use of the EPG template used by the user terminal, the edge node device and the STB would automatically replace the template with the default EPG template.

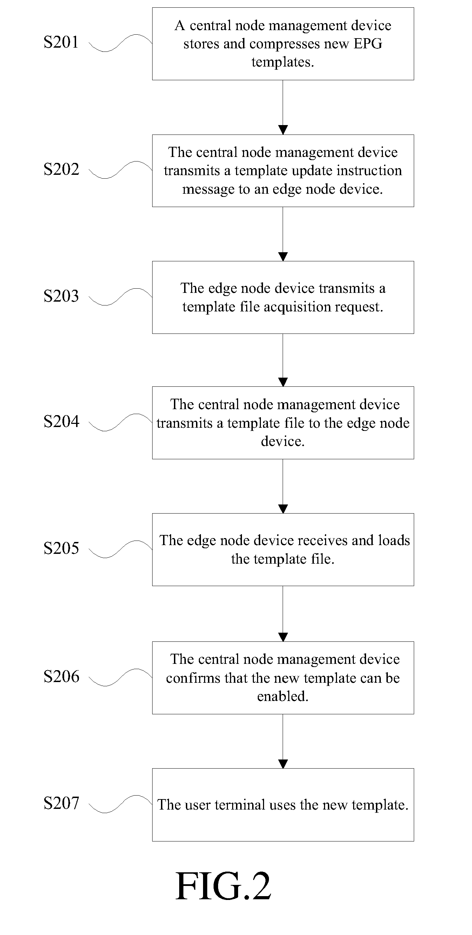

The above mentioned process of the user terminal replacing EPG template according to the first embodiment is based on the EPG template management performed by the central node management device for the edge node device. The EPG template management includes transmission, deletion and update of EPG templates. In the second embodiment of the present invention, a method for transmitting EPG template to the edge node device from the central node management device is shown in FIG.2 and includes the following steps:

In step S201, the central node management device stores and compresses new EPG templates. The central node management device may be an ECS (EPG Control Subsystem).

In step S202, the central node management device transmits a template update instruction message to an edge node device. The ECS transmits this EPG template message to a specified edge node device or all edge node devices according to the distribution of edge node devices. The ECS may transmit the template update instruction message via SOAP protocol and the message includes a template name, a physical storage location of template, a right control name for acquiring physical file, a password. Encryption and non-encryption transmission mode may be selected for transmitting the message.

In step S203, the edge node device transmits a template file acquisition request. A destination edge node device firstly determines whether the template update instruction message needs to be decrypted after receiving this message. If the template update instruction message needs to be decrypted, the destination edge node device decrypts the message according to preset decryption mode and then transmits a template file acquisition request to the central node management device via FTP protocol according to the information specified in the message.

In step S204, the central node management device transmits a template file to the edge node device.

In step S205, the edge node device receives and loads the template file. The edge node device firstly decompresses the template file after correctly acquiring the template file and then verifies the correctness of data. After confirming that the template file is correct, the edge node device performs priority loading operation on the new template according to service status of currently existing template and the queue of templates to be loaded. After completing the loading, the template is arranged and finally the operation result is returned to the central node management device such as an ECS. The priority loading operation mentioned in this step refers to that the edge node device presets priorities of new template files according to information such as template use record of each user terminal under the current edge node. The priorities are used to indicate the locations and recommendation levels of new templates when the new templates are displayed as thumbnails on the user terminals. In addition, if the storage space of the edge node is limited, the edge node device would delete some old template files with low utilization while arranging new templates according to template use records of different user terminals under the edge node.

In step S206, the central node management device confirms that the new template can be enabled. After new templates are all distributed to edge node devices and arranged, the central node management device such as an ECS confirms that the templates can be enabled.

In step S207, the user terminal uses the new template. After the central node management device enables the specified EPG template, the user terminal can select favorite function styles through the STB and use the new template according to the method described in the first embodiment.

The update and deletion processes of EPG template are similar to the above process, which are both controlled by the central node management device. The difference lies in that the central node management device transmits different message instructions to the edge node device. In other words, an EPG template update instruction is transmitted when a template is required to be updated. Specific operations in an updating process are similar to the transmission process described in the second embodiment. Likewise, the update process needs necessary information for the edge node device to acquire a template from the central node management device. The necessary information is for example a template name, a physical storage location of template, a right control name for acquiring physical file and a password. The central node management device transmits an EPG template deletion instruction when the central node management device needs to delete a template stored in the edge node device, then the edge node device only needs to delete the specified EPG template according to this instruction.

In addition, the central node management device may acquire operation status of one or more edge node devices and file status of various templates in the edge node device by communicating periodically with one or more edge node devices, for example, transmitting a heartbeat request to a specified EPG template in an edge node device, in order to restore timely edge node devices or templates that have failed. The file status indicates whether the file name, file size and version number are correct.

With the method described in the first and second embodiments, the central node management device arranges and manages templates on each edge node device, and the central node management device controls the edge node device to transmit selectable template information to the user terminal and perform template replacement for the user terminal when the user terminal's template needs to be replaced. This method allows the user terminal to acquire template information directly from an edge node device very close to this terminal device, thereby enhancing processing speed of user terminal's template replacement request at the network side, saving storage space of the user terminal and reducing loss of backbone transmission resources.

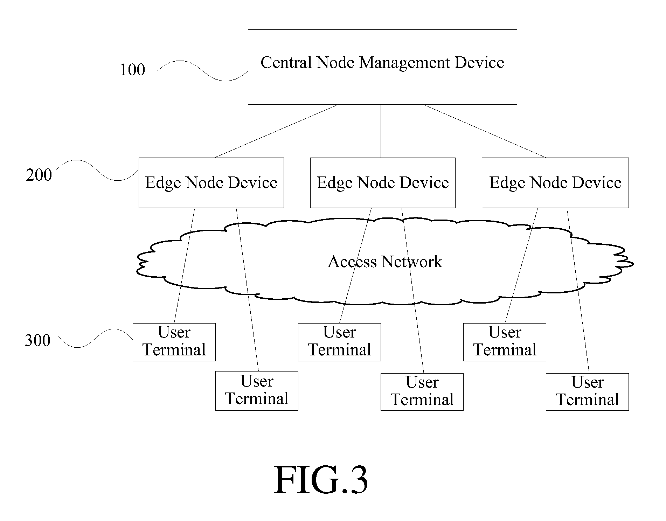

An embodiment of the present invention further provides a template replacement system including a central node management device, an edge node device and a user terminal. Arrangement locations and arrangement number of edge node devices for storing templates may vary according to the distribution of user terminals in the network. In the third embodiment of the present invention, there are three edge nodes in the network, for example. As shown in FIG. 3, the template replacement system includes a central node management device 100, an edge node device 200 and a user terminal 300.

The central node management device 100 manages each of the edge node devices 200 and each of the templates stored in the edge node devices 200. The central node management device 100 performs following operation, including: notifying each of the edge node devices 200 of transmission, updating and deletion messages for transmitting, updating and deleting EPG templates; and checking health status and operation status of all edge node devices 200 and all EPG templates at any time by transmitting heartbeat requests to specified EPG templates in order to timely restore failed edge node devices 200 or EPG templates. In addition, when receiving the request for replacing a template transmitted from a user terminal 300, the central node management device 100 controls the edge node device 200 of the edge node where the user terminal is located or the edge node device 200 closest to the user terminal to replace a template for the user terminal according to the location of the user terminal 300.

The edge node device 200 responds to the EPG template transmission, updating and deletion instructions from the central node management device, and sequences priorities of the EPG templates stored in the device for use in the user terminals 300. In addition, when receiving the message transmitted from the central node management device 100 which confirms replacing an EPG template for a user terminal 300, the edge node device 200 transmits EPG templates locally stored to the user terminal 300 and replaces a template for the user terminal 300.

The user terminal 300 transmits an EPG template replacement request and receives an EPG template from the edge node device 200.

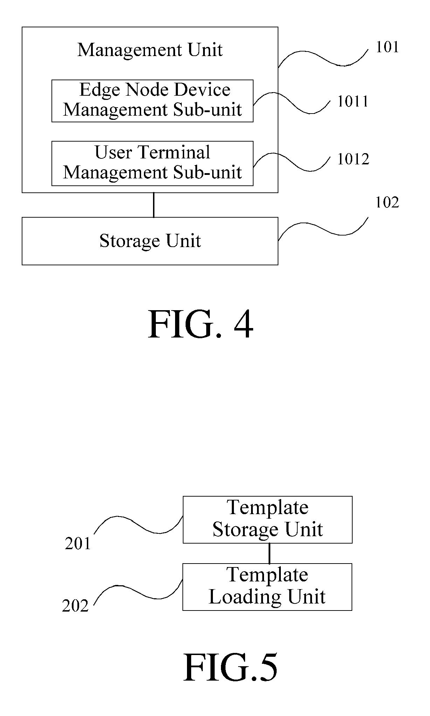

The third embodiment of the present invention also provides a central node management device. As shown in FIG.4, the central node management device includes a management unit 101 and a storage unit 102.

The management unit 101 maintains and manages each of the edge node devices and controls each of the edge node devices for replacing user terminals' templates. The management unit further includes an edge node device management sub-unit 1011 and a user terminal management sub-unit 1012. The edge node device management sub-unit 1011 is configured to maintain and manage each of the edge node devices and periodically acquire status of each of the edge node devices and templates, and the user terminal management sub-unit 1012 is configured to process a user terminal's request for replacing a template, confirming the user terminal's request and controlling the edge node device of the edge node where the user terminal is located or the edge node device closest to the user terminal to replace the template for the user terminal. The storage unit 102 stores templates and provides templates for each of the edge node devices under the control of the management unit 101.

The third embodiment of the present invention also provides an edge node device. As shown in FIG.5, the edge node device includes a template storage unit 201 and a template loading unit 202.

The template storage unit 201 stores templates sent from the network side. The template loading unit 202 receives EPG template transmission, updating and deletion instructions from the central node, sequences all templates transmitted from the central node and, upon the central node management device's confirmation, transmits a locally stored EPG template to a user terminal and replace a template for the user terminal.

With the method described in the third embodiment, information on EPG templates is stored in each of the edge node devices in the network and the central node management device arranges and manages EPG templates stored in each of the edge node devices and monitors operation status of each of the edge node devices and each of the EPG templates in real time to realize a distributed arrangement and management of EPG templates, thereby enhancing the speed of processing user terminals' template replacement requests at the network side and saving storage space of the user terminals and loss of backbone transmission resources at the same time.

The detailed description is described with respect to exemplary embodiments of the present invention. However, the present invention is not limited thereto, and any variations that occur to those skilled in the art should fall within the protection scope of the present invention.

## Claims

1. A method for template replacement, comprising:
receiving a template replacement request transmitted from a user terminal; and
controlling an edge node device to replace a template for the user terminal.

2. The method for template replacement according to claim 1, wherein controlling the edge node device to replace the template for the user terminal further comprises:
controlling the edge node device to transmit selectable template information to the user terminal; and
controlling the edge node device to transmit a template specified by the user terminal when receiving a request for replacement with the specified template transmitted from the user terminal.

3. The method for template replacement according to claim 2, wherein before controlling the edge node device to replace the template for the user terminal, the method further comprises:
storing a template in the edge node device.

4. The method for template replacement according to claim 2 or 3, wherein before controlling the edge node device to replace the template for the user terminal, the method further comprises:
updating a template in the edge node device; and/or
deleting a template in the edge node device.

5. The method for template replacement according to claim 2, further comprising:
acquiring operation status of each of the edge node devices and/or status of templates on each of the edge node devices; and
restoring an abnormal edge node device and/or an abnormal template on the edge node device.

6. The method for template replacement according to claim 4, wherein updating templates stored in the edge node device further comprises:
transmitting a template update instruction message to the edge node device;
receiving a template acquisition request transmitted by the edge node device according to the template update instruction message; and
transmitting the template to the edge node device.

7. The method for template replacement according to claim 6, wherein the template update instruction message comprises a template name, a physical storage location of the template, a right control name for acquiring physical file and a password.

8. The method for template replacement according to claim 6, wherein transmitting the template update instruction message to the edge node device further comprises:
transmitting the template update instruction message in encryption or non-encryption mode to the edge node device.

9. The method for template replacement according to claim 3, further comprising:
sequencing, by the edge node device, all currently stored templates.

10. A method for template replacement, comprising:
transmitting selectable template information to a user terminal according to an instruction from a central node management device;
receiving a request for replacement with a specified template transmitted from a user terminal; and
transmitting the specified template to the user terminal according to an instruction from the central node management device.

11. A template replacement system, comprising: a central node management device and at least one edge node device, wherein,
the central node management device is configured to receive a template replacement request transmitted from a user terminal and to control each of the edge node devices to replace a template for the user terminal; and
the edge node device is configured to store templates and to replace a template for the user terminal under the control of the central node management device.

12. The template replacement system according to claim 11, wherein,
the central node management equipment is further configured to update and/or delete a template in the edge node device.

13. The template replacement system according to claim 11, wherein the central node management device is further configured to acquire operation status of an edge node device and/or status of templates on the edge node device from the edge node device; and to restore an abnormal edge node device and/or an abnormal template stored in the edge node device.

14. A central node management device, comprising a management unit and a storage unit, wherein:
the management unit is configured to receive a template replacement request transmitted from a user terminal and to control each of edge node devices to replace a template for the user terminal; and
the storage unit is configured to store a template and to provide a template for each of the edge node devices under the control of the management unit.

15. The central node management device according to claim 14, wherein
the management unit is further configured to update and/or delete a template in an edge node device.

16. The central node management device according to claim 14, wherein the management unit further comprises an edge node device management sub-unit and a user terminal management sub-unit, and wherein:
the edge node device management sub-unit is configured to maintain and manage each of the edge node devices and to periodically acquire operation status of each of the edge node devices and status of a template on each of the edge node devices; and
the user terminal management sub-unit is configured to process the user terminal's request for replacing a template.

17. An edge node device, comprising a template storage unit and a template loading unit, wherein:
the template storage unit is configured to store a template transmitted from a central node management device; and
the template loading unit is configured to replace a template stored in the template storage unit for a user terminal under the control of the central node management device.

18. The edge node device according to claim 17, wherein:
the template loading unit is further configured to sequence all templates transmitted from the central node management device.

19. The edge node device according to claim 17, wherein:
the template loading unit is further configured to transmit selectable template information to the user terminal according to an instruction from the central node management device; to receive a request for replacement with a specified template transmitted from the user terminal; and transmit the template specified by the user terminal to the user terminal according to the instruction from the central node management device.
